# EUROPÄISCHE PATENTSCHRIFT

(11) **EP 0 491 298 B1**
(45) Veröffentlichungstag und Bekanntmachung des Hinweises auf die Patenterteilung: **17.08.1994**
(21) Anmeldenummer: 91121420.3
(22) Anmeldetag: 13.12.1991
(51) Int. Cl.: A23C 19/082

(54) **Schmelzkäsezusatzstoffe**
Additives for processed cheese
Additifs pour fromages fondus

(30) Priorität: 19.12.1990 DE 4040621
(43) Veröffentlichungstag der Anmeldung: 24.06.1992
(73) Patentinhaber: BK LADENBURG GmbH, Gesellschaft für chemische Erzeugnisse, D-68526 Ladenburg (DE)
(72) Erfinder: Merkenich, Karl, Dr., W-6149 Fürth/Fahrenbach (DE); Maurer-Rothmann, Andrea, Dr., W-6940 Weinheim (DE); Walter, Edgar, W-6800 Mannheim 1 (DE); Scheurer, Günter, W-6733 Hasloch (DE); Klostermeyer, Henning, Prof. Dr., W-8050 Freising (DE)
(74) Vertreter: Grussdorf, Jürgen, Dr.

(56) Entgegenhaltungen:
- EP-A- 0 289 096
- FR-A- 2 622 772
- JOURNAL OF DAIRY SCIENCE Bd. 67, Nr. 4, 1984, CHAMPAIGN, ILLINOIS US Seiten 764- 778; S.K.GUPTA ET AL.: 'Effect of Emulsifier Salts on Textural and FlavorProperties of Processed Cheeses'
- FOOD TECHNOLOGY Bd. 39, Nr. 5, Mai 1985, CHICAGO IL US Seiten 63 - 70;
- LAWRENCE A. SHIMP: 'Process Cheese Principles'

## Beschreibung

Die Erfindung betrifft eine neuartige Schmelzkäsezubereitung sowie die Verwendung spezieller Zusatzstoffe bei der Herstellung von Schmelzkäse.

Schmelzkäsezubereitungen wurden bereits im Jahre 1911 erstmalig hergestellt und in der Folge durch Wechsel der Zusammensetzung der Ausgangsstoffe laufend geschmacklich, im Aussehen und in der Textur verbessert. Je nach der Zusammensetzung können dabei streichfähige oder schnittfeste Produkte erhalten werden. Ausgangsmaterial ist ein schnittfester Käse wie Gouda, Emmentaler etc., welcher zerkleinert und zusammen mit Fett, insbesondere Butter und Schmelzsalzen sowie ggfl. etwas Wasser, bei Temperaturen von ca. 80-95° C gemischt und geschmolzen wird, wonach die Masse ausgeformt, abgekühlt und verpackt wird.

Dokument EP-A- 0 289 096 beschreibt Käsezubereitungen unter Vermendung von Mischungen, welche beispielweise modifizierte Stärke, Gelatine, Johannisbrotkern- und Guarmehl enthalten.

Der Zusatz von Schmelzsalzen mit ihrer calciumkomplexierenden und puffernden Wirkung in einer Menge von etwa 2,5 - 4 % der Gesamtmasse erweist sich dabei als unbedingt erforderlich, um eine Entmischung von Casein, Fett und Wasser zu verhindern. Andererseits zeigt sich, daß die Schmelzsalze bei längerer Lagerung, insbesondere bei wechselnden Temperaturen, zu einer Abscheidung von Kristallen an der Oberfläche des Schmelzkäses führen. Die in sehr feinen Kristallen ausgeschiedenen Stoffe werden vom Verbraucher entweder für Schimmel gehalten oder der Käse aufgrund der "sandigen" Oberfläche ebenfalls nicht mehr als für den Verzehr geeignet erachtet. Naturgemäß tritt die Auskristallisation umso schneller und reichlicher auf, je höher die Konzentration der Schmelzsalze ist, so daß insbesondere bei 3 bis 4 % Schmelzsalz eine Kristallbildung innerhalb von wenigen Wochen beobachtet wird, jedoch läßt sich auch bei für das Schmelzen nicht mehr voll ausreichenden Zusätzen von nur noch 1 1/2 - 2 % Schmelzsalz bisher eine Auskristallisation nicht ausschließen, insbesondere, wenn Trinatriumcitrat als Schmelzsalz eingesetzt wird.

Es bestand daher ein Bedürfnis, Schmelzkäsezubereitungen herzustellen, die einerseits ein für eine problemlose Herstellung ausreichendes Schmelzverhalten ausweisen und andererseits nicht zur Auskristallisation von Schmelzsalzen führen. Weiterhin dürfen die Zusätze die geschmacklichen und sensorischen Eigenschaften des fertigen Schmelzkäses nicht negativ beeinflussen.

Diese Aufgabe wird durch die in Anspruch 1 beschriebene Maßnahme gelöst und durch die in den Unteransprüchen beschriebenen Maßnahmen zusätzlich gefördert.

Modifizierte Stärke, insbesondere durch Teilhydrolyse und/oder Veresterung oder Veretherung in Wasser heiß oder auch kaltlöslich gemachte Stärkederivate sind als Bindemittel und Verdicker für vielfache Einsatzmöglichkeiten in der Lebensmittelindustrie bereits bekannt. Typische Anwendungen sind z.B. in Instant Suppen und Soßen, Desserts, Frucht- und Cremefüllungen, Mayonnaisen, Eiscreme, Mikrowellenprodukten und Fertiggerichten. Es ist bekannt, daß je nach Herkunft der Stärke aus Weizen, Mais oder Kartoffeln, Reis, Tapioka oder Wachsmais der Gehalt an Amylose und Amylopektin verschieden hoch ist (25:75 bzw. 20:80 bzw. 1:99 %) und damit das Verdickungs- und Gelierverhalten sich unterscheidet. Produkte mit hohem Amylosegehalt verdicken beim Lösen nur langsam, bilden jedoch beim Abkühlen stabile Gele, während amylopektinreiche Produkte sich rasch lösen und entsprechend schnell die Viskosität erhöhen, jedoch keine Gele bilden, so daß die Produkte wenig nachdicken. Durch Modifizierung der nativen Stärken durch saure oder basische Hydrolyse, Veresterung mit Essigsäure, Phosphorsäure oder Adipinsäure oder Umsetzung mit Propylenoxid zu Hydroxypropylstärke oder eine Kombination dieser Verfahren ist es bekannt, modifizierte Stärken herzustellen, deren Löslichkeit und Quellfähigkeit, insbesondere in kaltem Wasser, verbessert ist und die in gequollenem Zustand gegen längeres Erhitzen stabil sind, insbesondere aber eine hohe Gefrier-/Taustabilität aufweisen.

Überraschenderweise wirkt eine bestimmte Gruppe dieser modifizierten Stärken in den erfindungsgemäßen Schmelzkäsezubereitungen nicht nur als Bindemittel und Verdicker, sondern erlaubt es, die Zugabemenge der Schmelzsalze, insbesondere von Trinatriumcitrat, gegenüber bekannten Rezepturen etwa zu halbieren, so daß es nicht mehr zur Kristallbildung kommt und die Ausblühungen an der Oberfläche unterbleiben.

Es handelt sich dabei um Produkte, die aus amylopectinreichen und amylosearmen Stärken, insbesondere Wachsmaisstärken, hergestellt sind; Tapiokastärke ist bereits weniger gut geeignet, während z.B. Kartoffelstärken ungeeignet sind. Die erfindungsgemäß verwendbaren modifizierten Stärken müssen folgende Bedingungen erfüllen:
1. bei Temperaturen von 60-90°C in Wasser löslich sein,
2. bei Temperaturen von 60-90°C in Wasser eine hohe und mindestens über 10 Minuten konstante Viskosität aufweisen,
3. geschmacksneutral sein, d.h. insbesondere keinen pappigen Geschmack aufweisen,
4. mit Milcheiweiß verträglich sein, d.h. insbesondere nicht denaturierend oder verklumpend wirken.

Außer Wachsmaisstärke und ihren Teilhydrolyseprodukten sind insbesondere Hydroxypropylwachsmaisstärke, Hydroxypropyldistärkephosphat aus Wachsmaisstärke oder Tapioka, acetyliertes Distärkephosphat oder Distärkeadipat aus Wachsmaisstärke geeignet.

Für eine ausreichende Wirkung der Zusätze ist es erforderlich, etwa 0,25 - 2,5 %, vorzugsweise 0,5 -1 %, der Gesamtmenge zuzufügen, wobei ein Überschuß den Effekt natürlich nicht verhindert, aber aus wirtschaftlichen Gründen nicht sinnvoll ist und die Festigkeit des Produkts zu hoch werden kann. In den erfindungsgemäßen Schmelzkäsemischungen können problemlos bis zu 3 % Schmelzsalze, vorzugsweise 1,5-2,5 %, enthalten sein, ohne daß es zu einer Auskristallisation kommt.

Als Schmelzsalze werden Trinatriumcitrat oder Natriumphosphat oder deren Mischungen, meist in Form der handelsüblichen Hydrate, verwendet.

Als Bindemittel und Verdicker können in üblichen Mengen, d.h. 0-3 %, vorzugsweise 0,5-1 %, der Gesamtmasse, Stärke, modifizierte Stärke anderer Provenienz, Guarmehl, Johannisbrotmehl, Carrageen, Methyl- oder Carboxymethylcellulose, Agar Agar, Alginate oder ähnliche Produkte zugesetzt werden.

Als Fettquelle wird Butter bevorzugt. Es ist jedoch auch möglich, andere tierische oder pflanzliche Fette und Öle, wie sie in der Margarineindustrie verwendet werden, oder auch Rahm einzusetzen.

Als Käseersatzstoffe können Kasein, Molkepulver, Quark, Joghurt, Milcheiweiß und in gewissem Umfang auch pflanzliche Proteine, insbesondere Sojaproteine, mit verwendet werden.

Um den Geschmack zu verändern, können Würzsalze und Kräuter und gegebenenfalls stückige Produkte wie Fleischprodukte, Früchte, Nüsse, Pilze etc. zugefügt werden.

Es ist heute teilweise auch gebräuchlich, die Käsemasse durch Einleiten von Gas, insbesondere Stickstoff, in einen aufgeschäumten, cremigen Zustand zu bringen. Auch solche Ausführungsformen sind mit den erfindungsgemäßen Zusammensetzungen möglich.

In den folgenden Beispielen ist die Erfindung näher beschrieben.

### Beispiel 1

### Streichfähiger Schmelzkäse

- 71,7 kg: Gouda (45 % Fett i.Tr.)
- 1,8 kg: Trinatriumcitrat
- 1,4 kg: Wachsmaisstärke
- 5,2 kg: Butter
- 19,9 kg: Wasser

Die vorstehenden Produkte werden in einem Rührkessel zusammengegeben und unter langsamem Rühren unter Durchleiten von Wasserdampf in etwa 10-20 min auf die Schmelztemperatur von 90-92° C erwärmt. Danach wird unter kräftigem Rühren homogenisiert, die Masse in Formen gegossen, auf Raumtemperatur abgekühlt und 12 Stunden zwischengelagert. Die Endlagerung bis zum Gebrauch erfolgt bei 6° C.

Es wird ein streichfähiger Schmelzkäse erhalten, welcher 46 % Fett i.Tr. bei einer Gesamttrockenmasse von 46 % enthält. Auch nach einer Lagerzeit von 4-6 Monaten verändern sich Aussehen und Konsistenz nicht, insbesondere ist kein Ausblühen der Schmelzsalze zu beobachten.

### Beispiel 2

### Schnittfester Schmelzkäse

- 74,9 kg: Gouda (45 % Fett i.Tr.)
- 1,5 kg: Trinatriumcitrat
- 0,4 kg: modifizierte Stärke (Hydroxypropyldistärkephosphat aus Wachmaisstärke (Purity W))
- 1,0 kg: Saccharosemonostearoylmonocitronensäureester
- 4,2 kg: Butter
- 18,0 kg: Wasser

Die Mischung wird wie in Beispiel 1 verarbeitet, jedoch auf 95° C erwärmt.

Es wird ein schnittfester Käse erhalten mit einem Fettgehalt von 47 % i.Tr. und einer Trockenmasse von ca. 50 %. Auch bei dieser Zubereitung wird nach 6 Monaten Lagerung kein Ausblühen von Schmelzsalzen beobachtet.

### Beispiel 3

### Schnittfester Schmelzkäse

- 73,2 kg: Edamer (46 % Fett i. Tr.)
- 1,5 kg: Trinatriumcitrat
- 2,0 kg: acetyliertes Distärkephosphat aus Wachsmaisstärke (Ultra Tex 2)
- 4,8 kg: Butter
- 18,5 kg: Wasser

Die Mischung wird wie in Beispiel 1 beschrieben verarbeitet.

Es wird ein schnittfester Schmelzkäse mit einem Fettgehalt von 46 % Fett i.Tr. erhalten, welcher 6 Monate unverändert lagerfähig ist.

## Patentansprüche

1. Schmelzkäsezubereitung enhaltend Käse, Fett, Schmelzsalze, Wasser und übliche Zusatzstoffe wie Emulgatoren, Bindemittel, Verdicker, Quark, Milcheiweiß, Aromastoffe in den üblichen Mengen, **dadurch** **gekennzeichnet,** daß Trinatriumcitrat und/oder Natriumphosphat als Schmelzsalze in einer Menge von 1,5 bis 3 % verwendet werden und die Mischung eine modifizierte Stärke mit einem Gehalt von mehr als 80 % Amylopektin und weniger als 20 % Amylose in einer Menge von 0,25 bis 2 % enthält.

2. Schmelzkäsezubereitung gemäß Anspruch 1, **dadurch gekennzeichnet**, daß die modifizierte Stärke in einer Menge von 0,5 bis 1 % enthalten ist.

3. Schmelzkäsezubereitung gemäß den Ansprüchen 1 bis 2, **dadurch gekenn****zeichnet,** daß die modifizierte Stärke aus Wachsmais hergestellt ist.

## Claims

1. Processed cheese preparation containing cheese, fat, processing salts, water and conventional additives, such as emulsifiers, binding agents, thickeners, curds, milk protein, aroma materials, in the usual amounts, characterised in that trisodium citrate and/or sodium phosphate are used as processing salts in an amount of 1.5 to 3% and the mixture contains a modified starch with a content of more than 80% of amylopectin and less than 20% of amylose in an amount of 0.25 to 2%.

2. Processed cheese preparation according to claim 1, characterised in that the modified starch is contained in an amount of 0.5 to 1%.

3. Processed cheese preparation according to claims 1 to 2, characterised in that the modified starch is produced from wax maize.

## Revendications

1. Préparation de fromage fondu contenant du fromage, de la graisse, des sels de fusion, de l'eau et des additifs courants, tels que des agents émulsionnants, des liants, des épaississants, de la caillebotte, des protides de lait, des substances aromatiques, dans les quantités courantes, caractérisée en ce que, comme sels de fusion, on utilise du citrate trisodique et/ou du phosphate de sodium en une quantité de 1,5 à 3 % et en ce que le mélange contient en une quantité de 0,25 à 2 % un amidon modifié ayant une teneur de plus de 80 % en amylopectine et de moins de 20 % en amylose.

2. Préparation de fromage fondu suivant la revendication 1, caractérisée en ce que l'amidon modifié est contenu en une quantité de 0,5 à 1 %.

3. Préparation de fromage fondu suivant l'une des revendication 1 et 2, caractérisée en ce que l'amidon modifié est préparé à partir de maïs cireux.
